# DEMANDE DE BREVET EUROPEEN

(11) **EP 3 506 470 A1**
(43) Date de publication de la demande: **03.07.2019**
(21) Numéro de dépôt: 18213221.7
(22) Date de dépôt: 17.12.2018
(51) Int. Cl.: H02K 23/30, H02K 3/28, H02K 3/51

(54) **ROTOR DE MACHINE ELECTRIQUE TOURNANTE ET PROCEDE DE FABRICATION ASSOCIE**

(30) Priorité: 02.01.2018 FR 1850002
(71) Demandeur: Valeo Systèmes d'Essuyage, 78322 Le Mesnil Saint Denis (FR)
(72) Inventeur: HERRADA, Jose-Luis, 78322 Le Mesnil Saint Denis (FR); AUBUGEAU, Quentin, 86108 Chatellerault (FR)
(74) Mandataire: Valeo Systèmes d'Essuyage

(57) **Abrégé**

La présente invention concerne un rotor (1) de machine électrique tournante comprenant :
- un corps (3) comprenant une âme centrale cylindrique (5) et une pluralité circonférentielle de bras (B1...B18) s'étendant radialement à partir de l'âme centrale cylindrique (5), le corps (3) étant destiné à être monté mobile autour d'un axe de rotation X,
- un bobinage réalisé par des enroulements de spires et formant au moins une série de bobines (C1...C9, C1'...C9'), une bobine (C1...C9, C1'...C9') comprenant un nombre prédéterminé de spires autour d'au moins deux bras (B1...B18) du corps (3), deux bobines (C1...C9, C1'...C9') adjacentes d'une série étant décalées angulairement l'une par rapport à l'autre avec un recouvrement partiel,
dans lequel la dernière bobine (C9, C9'), située radialement le plus à l'extérieur, comprend un nombre prédéterminé de spires inférieur au nombre prédéterminé de spires des autres bobines de la série (C1...C8, C1'...C8').

## Description

La présente invention concerne une machine tournante, notamment un moteur électrique destiné à être utilisé dans un véhicule automobile, par exemple dans un moto-réducteur et plus particulièrement une machine tournante comprenant un rotor bobiné.

Il est connu d'utiliser des rotors bobinés dans certains moteurs électriques. Ces rotors bobinés comprennent généralement un corps, réalisé par un paquet de tôles, comprenant des bras autour desquels sont enroulées des spires pour former des bobines destinées à interagir avec les pôles du stator fait par des aimants ou alternativement par des bobines. L'alimentation des bobines du rotor permet l'interaction avec les pôles du stator de manière à entraîner le rotor en rotation. L'alimentation des bobines du rotor est par exemple réalisée par un collecteur alimenté par des balais.

Les différentes bobines du rotor sont décalées angulairement les unes des autres et peuvent notamment se superposer. Dans ce cas, les spires de la ou des dernière(s) bobine(s) sont enroulées et maintenues autour de l'extrémité des bras de sorte qu'il existe un risque non négligeable de décrochage d'une spire durant la durée de vie de la machine tournante pouvant conduire à un dysfonctionnement de cette dernière. En effet, il convient de limiter au maximum le diamètre du rotor de manière à limiter l'encombrement de la machine tournante ce qui facilite son implémentation dans le véhicule et explique le fait qu'on ne peut pas augmenter la taille des bras pour éviter un décrochage des spires.

La présente invention vise donc à fournir une solution permettant d'éviter le décrochage des dernières spires d'un bobinage au niveau d'un rotor sans augmenter le diamètre du rotor.

A cet effet, la présente invention concerne un rotor de machine électrique tournante comprenant :
- un corps comprenant une âme centrale cylindrique et une pluralité circonférentielle de bras s'étendant radialement à partir de l'âme centrale cylindrique, le corps étant destiné à être monté mobile autour d'un axe de rotation X,
- un bobinage réalisé par des enroulements successifs de spires et formant au moins une série de bobines, une bobine comprenant un nombre prédéterminé de spires autour d'au moins deux bras du corps, deux bobines adjacentes d'une série étant décalées angulairement l'une par rapport à l'autre avec un recouvrement partiel, dans lequel la dernière bobine d'une série, située radialement le plus à l'extérieur, comprend un nombre prédéterminé de spires inférieur au nombre prédéterminé de spires des autres bobines de la série.

Le rotor peut également comprendre l'un des aspects supplémentaires suivants :
au moins une série de bobines comporte au moins une spire supplémentaire enroulée entre plusieurs bras dont l'un au moins est différent des bras autour desquels est enroulée la dernière bobine de la série.

Le nombre de bras couverts par la spire supplémentaire peut être différent du nombre des bras couverts par les autres bobines.

La, au moins une, spire supplémentaire est enroulée autour d'au moins un des bras autour duquel est enroulée la dernière bobine de la série.

L'utilisation d'au moins un bras différent des bras autour desquels est enroulée la dernière bobine de la série et d'au moins un bras autour desquels enroulée la dernière bobine de la série permet à la spire supplémentaire de recouvrir partiellement les spires de la dernière bobine de la série de manière à assurer leur maintien en position.

La, au moins une, spire supplémentaire s'étend de manière à recouvrir au moins partiellement l'avant-dernière bobine de la série adjacente à la dernière bobine de la série.

Le recouvrement partiel de l'avant dernière-bobine de la série indique que la spire supplémentaire s'étend dans une direction inverse aux bobines de la série.

La, au moins une, spire supplémentaire s'étend dans une direction sensiblement égale à 360° divisé par le nombre de pôles de la machine électrique tournante par rapport à la direction des spires de la dernière bobine de la série. Pour une machine comprenant quatre pôles, cela correspond à une spire supplémentaire s'étendant dans une direction sensiblement perpendiculaire à la direction des spires de la dernière bobine de la série.

La, au moins une, spire supplémentaire recouvre partiellement les spires de la dernière bobine de la série.

Le rotor peut comprendre deux séries de bobines disposées à 180° l'une par rapport à l'autre par rapport à l'axe de rotation X.

Le rotor peut également comprendre un nombre de séries de bobines plus important, par exemple quatre bobines disposées à 90°.

Les bras du corps ont une forme générale de T dont la base est dirigée vers l'axe de rotation X et dont l'extrémité libre forme deux retours saillants de retenue des spires, le nombre prédéterminé de spires de la dernière bobine de la, au moins une, série étant déterminé de sorte que les spires de ladite dernière bobine sont comprises au moins partiellement dans un espace défini par les droites passant par l'extrémité des retours saillants permettant la retenue des spires de ladite dernière bobine et perpendiculaires à la droite reliant les extrémités desdits retours saillants permettant la retenue des spires de la dernière bobine.

Le rotor est configuré pour coopérer avec un stator de la machine électrique tournante comprenant un nombre de pôles supérieur ou égal à quatre.

L'angle couvert par les bras autour desquels est formée une bobine est sensiblement égal à 360° divisé par le nombre de pôles de la machine électrique tournante. Cela permet à une bobine de couvrir un pas polaire.

Le rotor comprend au moins dix bras.

Le rotor comprend dix-huit bras, une bobine étant formée par des spires enroulées autour de quatre bras.

Le nombre de spires des bobines précédentes par rapport à la dernière bobine est de 30 spires.

Le nombre de bobines du rotor peut être de neuf ou de dix-huit réparties en deux séries de neuf bobines.

Le nombre de pôles est égal à 4.

La présente invention concerne également une machine tournante comprenant un rotor tel que décrit précédemment.

La présente invention concerne également un procédé de fabrication d'un rotor de machine électrique tournante comprenant un corps comprenant une âme centrale cylindrique et une pluralité circonférentielle de bras s'étendant radialement à partir de l'âme centrale cylindrique, le corps étant destiné à être monté mobile autour d'un axe de rotation X, le procédé comprenant :
- une succession d'étapes d'enroulement d'un premier nombre prédéterminé N de spires d'un bobinage autour d'au moins deux bras du corps pour former au moins une série de bobines, les étapes d'enroulement étant réalisées de sorte que deux bobines adjacentes d'une série sont enroulées autour d'au moins un bras commun et d'au moins un bras distinct, deux bobines adjacentes d'une série étant décalées angulairement l'une par rapport à l'autre avec un recouvrement partiel,
- une étape supplémentaire d'enroulement d'un deuxième nombre prédéterminé N' de spires inférieur au premier nombre prédéterminé N autour d'au moins deux bras du corps pour former une dernière bobine de la série, située radialement le plus à l'extérieur, l'étape supplémentaire étant réalisée autour d'au moins un bras commun avec l'avant-dernière bobine de la série, adjacente à la dernière bobine de la série, et d'au moins un bras distinct de l'avant-dernière bobine de la série de sorte que la dernière bobine de la série est décalée angulairement de l'avant-dernière bobine de la série avec un recouvrement partiel.

Le procédé de fabrication peut également comporter l'un des aspects suivants :
Le procédé de fabrication comprend une autre étape supplémentaire d'enroulement d'au moins une spire du bobinage autour d'au moins deux bras dont l'un au moins est différent des bras autour desquels est enroulée la dernière bobine de la série.

Les différentes étapes sont réalisées en double et simultanément à un premier emplacement du corps et à un deuxième emplacement du corps diamétralement opposé au premier emplacement de manière à former simultanément deux séries de bobines symétriques par rapport à l'axe de rotation X.

Alternativement, les étapes sont réalisées en double et alternativement à un premier emplacement du corps et à un deuxième emplacement du corps diamétralement opposé au premier emplacement de manière à former deux séries de bobines symétriques par rapport à l'axe de rotation X.

D'autres caractéristiques et avantages de l'invention ressortiront de la description suivante, donnée à titre d'exemple et sans caractère limitatif, en regard des dessins annexés sur lesquels :
- la figure 1 représente une vue schématique en perspective d'un corps de rotor,
- la figure 2 représente une vue schématique en coupe radiale d'un corps de rotor,
- la figure 3 représente un schéma d'un rotor comprenant deux séries de bobines comprenant chacune neuf bobines décalées angulairement les unes des autres,
- la figure 4 représente un schéma du rotor de la figure 3 vu du côté du collecteur,
- la figure 5 représente un schéma d'un rotor comprenant quatre séries de bobines,
- la figure 6 représente une vue schématique selon l'axe de rotation X d'un corps de rotor et d'une position des spires d'enroulement,
- la figure 7 représente un schéma du rotor de la figure 3 sur lequel sont représentés deux emplacements possibles pour les spires supplémentaires,
- la figure 8 représente un organigramme des différentes étapes de fabrication d'un rotor selon la présente invention,

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

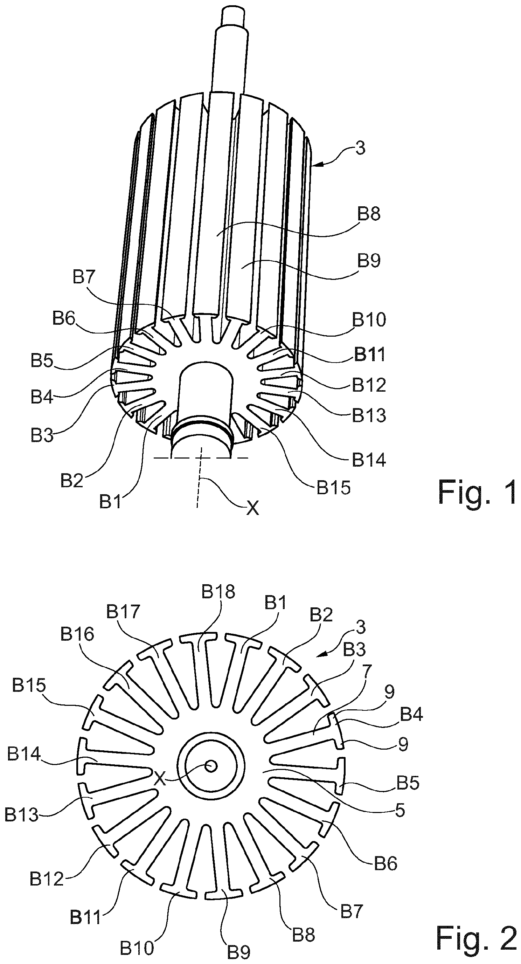

La figure 1 représente une vue schématique en perspective d'un corps 3 de rotor 1 d'une machine tournante telle qu'un moteur électrique. Dans le cadre de la présente invention, la machine tournante comprend au moins quatre pôles disposés au niveau du stator (non représenté). Les pôles du stator sont par exemple réalisés par des aimants permanents.

Le corps 3 du rotor 1 a une forme générale cylindrique et est destiné à recevoir un bobinage formant une pluralité de bobines réparties sur son pourtour. Le corps 3 est destiné à être monté mobile autour d'un axe de rotation X correspondant à l'axe central du cylindre.

Le corps 3 comprend une âme centrale cylindrique 5 et une pluralité circonférentielle de bras, dix-huit dans le cas présent, notés B1, B2...B18 (les bras B16, B17 et B18 étant masqués sur la figure 1), c'est-à-dire une pluralité de bras disposés sur la circonférence de l'âme centrale cylindrique 5, s'étendant radialement à partir de l'âme centrale cylindrique 5. Les bras B1... B18 sont répartis régulièrement sur toute la circonférence de l'âme centrale cylindrique 5 et sont séparés par des encoches destinées à recevoir des enroulements de spires d'un bobinage. Dans le cas présent, le corps comprend 18 bras mais l'invention ne se limite pas à ce nombre de bras mais à tout nombre, préférentiellement supérieur à 10. De plus, les bras peuvent être répartis de manière non régulière.

Comme cela est mieux visible sur la figure 2 qui représente une vue en coupe radiale du corps 3, les bras B1...B18 du corps 3 ont par exemple une forme générale de T dont la base 7 est dirigée vers l'axe de rotation X et dont l'extrémité libre forme deux retours saillants 9 qui aident à la rétention des spires.

Le corps 3 est par exemple formé par un paquet de tôles assemblées entre elles, chaque tôle correspondant à une « tranche » du corps 3 comprenant une âme centrale cylindrique 5 et une pluralité de bras B1...B18. Cependant, d'autres types de corps 3, par exemple monobloc, sont également possibles.

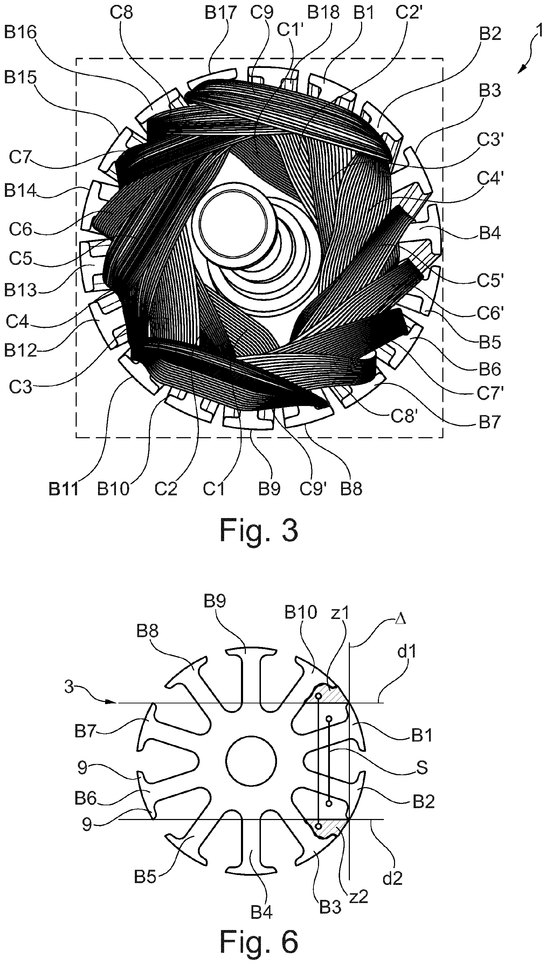

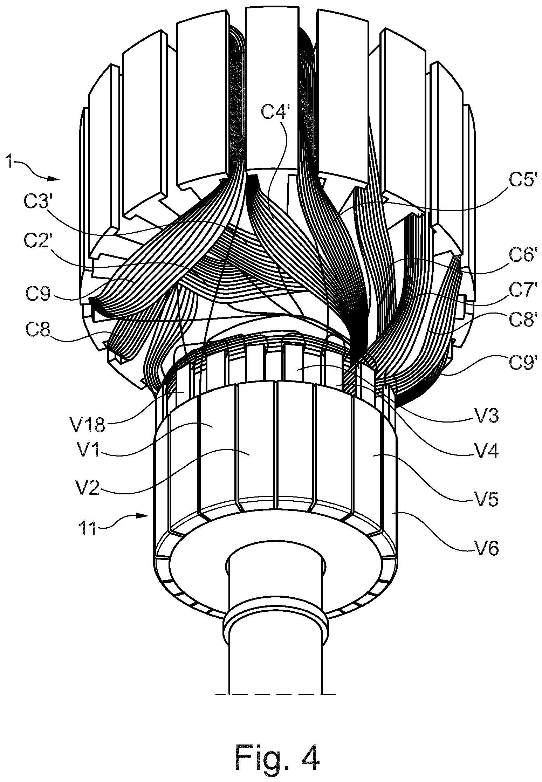

La figure 3 représente un schéma d'un rotor 1 comprenant un bobinage comprenant des enroulements de spires formant deux séries de bobines C1...C9 et C1'...C9' réparties sur les bras B1...B9 du corps 3. Une bobine est réalisée par une pluralité de spires enroulées autour d'au moins deux bras B1...B18 du corps et réalisées à partir d'un seul fil. Le fil est par exemple un fil de cuivre. Le rotor 1 comprend également un collecteur 11 permettant l'alimentation des bobines comme représenté sur la figure 4. La figure 4 représente le rotor 1 de la figure 3 vu du côté du collecteur 11, les deux extrémités d'une bobine C1...C9' sont reliées respectivement à une borne prédéfinie d'un collecteur 11 de manière à permettre l'alimentation de la bobine au moment désiré pour permettre l'entraînement en rotation du rotor 1. Le collecteur comprend par exemple dix-huit bornes notées V1...V18 sur lesquelles viennent frotter des balais (non représentés) pour assurer l'alimentation des bobines C1...C9'.

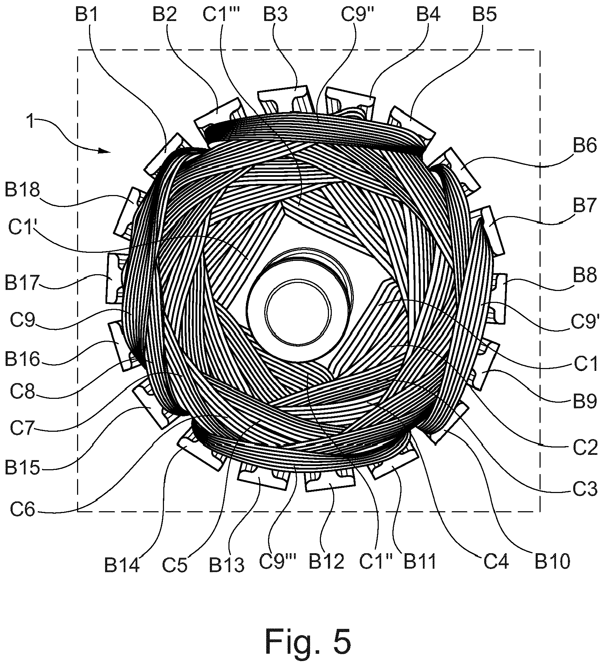

Cependant, il est à noter que la présente invention ne se limite pas à un rotor 1 comprenant deux séries de bobines C1...C9' mais s'étend à des rotors 1 comprenant un nombre de séries de bobines différent, par exemple quatre séries de bobines disposées à 90° comme représenté sur la figure 5. Par soucis de clarté, certaines des bobines de la figure 5 n'ont pas été référencées. Les bobines C1'...C9' de la deuxième série sont situées en regard des bobines de la première série C1...C9 comme dans le mode de réalisation de la figure 3 mais le rotor 1 comprend également une quatrième série C1'"...C9'" située en regard de la troisième série C1"...C9", les différentes séries étant disposées à 90° les unes des autres.

Les séries de bobines peuvent être réalisées simultanément si la machine réalisant les étapes d'enroulement comprend plusieurs bras d'enroulement, ce qui permet de former le bobinage du rotor 1 plus rapidement.

Les séries peuvent également être réalisées en alternance si la machine ne comprend qu'un seul bras d'enroulement des spires. Dans ce dernier cas, les premières bobines C1, C1', C1", C1'" de chacune des séries sont enroulées, puis les deuxième bobines C2, C2', C2", C2"' de chacune des séries et ainsi de suite jusqu'aux dernières bobines C9, C9', C9", C9'" de chacune des séries. On peut donc avoir deux séries de bobines C1...C9, C1'...C9' qui peuvent être réalisées avec un seul bras d'enroulement de la machine réalisant le bobinage. Le nombre de séries de bobines dépend notamment du nombre de pôles. En général, le nombre de séries de bobines est égal à un ou au nombre de pôles ou au nombre de pôles divisé par deux. Ainsi, pour un moteur comprenant quatre pôles, le nombre de série de bobines est de un, deux ou quatre.

L'utilisation d'un rotor 1 comprenant deux séries de bobines diamétralement opposées permet d'obtenir un rotor 1 plus équilibré (par rapport à un rotor 1 comprenant une seule série de bobines) puisque les positions des bobines des deux séries sont symétriques par rapport à l'axe de rotation X du rotor 1 et ne créent donc pas de balourd supplémentaire.

Dans le cas de la figure 3, les deux séries de bobines sont sensiblement identiques et sont disposés à 180° l'une de l'autre, c'est-à-dire qu'une bobine, par exemple la première bobine C1 de la première série est située en regard de la même bobine, la première bobine C1' dans notre exemple, de l'autre série de bobines. Dans le cas présent, chacune des séries comprend neuf bobines notées respectivement C1, C2...C9 et C1', C2'...C9'. Cependant, un nombre de bobines différent pour chaque série est également possible. De préférence, les deux séries de bobines ont le même nombre de bobines pour obtenir un rotor 1 équilibré.

Une bobine est donc formée par un enroulement d'un nombre prédéterminé de spires, par exemple trente, autour d'au moins deux bras du corps 3. Les spires d'une bobine sont toutes enroulées selon le même sens de rotation (horaire ou antihoraire). De plus, l'ensemble des spires des différentes bobines d'une série C1...C9' sont également enroulées selon le même sens de rotation. Dans le cas de la figure 3, une bobine C1...C9' est formée par un enroulement de spires autour de quatre bras, c'est-à-dire que quatre bras du corps sont disposés au milieu des spires d'une bobine C1...C9', les enroulements étant réalisés dans les encoches adjacentes aux deux bras les plus éloignés parmi les quatre. Ainsi, les spires formant la bobine C1 sont enroulées autour des bras B9, B10, B11 et B12 tandis que les spires de la bobine suivante C2 de la série sont enroulées autour des bras B10, B11, B12 et B13 (décalage d'un bras ou 20° entre deux bobines successives). Ainsi, deux bobines successives sont décalées angulairement l'une par rapport à l'autre avec un recouvrement partiel. Dans le cas présent, le décalage entre deux bobines successives correspond au décalage d'un bras, ce qui correspond à 20°. Du fait du recouvrement partiel, additionné à la présence de deux séries de bobines disposées à 180° l'une de l'autre dans le présent cas, les spires sont positionnées de plus en plus près de la périphérie du rotor 1 et des retours saillants 9 des bras B1...B18. Le nombre de bras B1...B18 autour desquels est enroulée une bobine est choisi pour être sensiblement égal au pas polaire ou légèrement inférieur. Le pas polaire correspond à un angle égal à 360° divisée par le nombre de pôles du stator. Dans le cas présent, le stator comprend quatre pôles, le pas polaire est donc égal à 90°. Le rotor 3 comprenant dix-huit bras, pour obtenir une bobine couvrant un angle de sensiblement 90°, il convient de choisir un nombre de bras égal à quatre ou cinq pour l'enroulement des spires et préférentiellement de quatre pour couvrir un angle inférieur au pas polaire. Cependant, les bobines C1...C9' peuvent également être enroulées autour d'un nombre de bras différent de quatre.

Afin d'éviter un décrochage des spires de la dernière bobine, ici les bobines C9 et C9', correspondant à la bobine radialement le plus à l'extérieur d'une série, le nombre de spires de la dernière bobine C9, C9' est réduit par rapport au nombre de spires des autres bobines C1...C8 et Ci'...C8'. Dans le cas présent, la dernière bobine C9, C9' présente donc un nombre de spires inférieur à trente (qui est le nombre de spires des autres bobines C1...C8 et Ci'...C8'). Ce nombre de spires réduit tend à dégrader légèrement les performances de la machine tournante mais permet d'éviter un décrochement des spires de la dernière bobine C9, C9' et donc un dysfonctionnement de la machine tournante. Les spires des bobines C1...C8, Ci'...C8' précédant la dernière bobine C9, C9' sont maintenues en position par les spires de la bobine adjacente située radialement vers l'extérieur de sorte qu'il n'y a pas de problème de maintien des spires de ces bobines C1...C8, Ci'...C8'.

Le nombre de spires de la dernière bobine C9, C9' peut être déterminé de sorte que ce nombre permettent de maintenir les spires dans une zone prédéterminée des encoches dans lesquelles sont positionnées les spires de la dernière bobine C9, C9'. La figure 6 représente une vue schématique selon l'axe de rotation X d'un corps 3 comprenant dix bras B1, B2...B10 et destiné à recevoir des bobines formées par des enroulements de spires autour de deux bras. La dernière bobine d'une série est par exemple enroulée autour des bras B1 et B2. Les spires de la dernière bobine sont donc positionnées dans les encoches situées entre les bras B2 et B3 d'une part et entre les bras B10 et B1 d'autre part. Afin d'être maintenues par les retours saillants 9, les spires d'une bobine doivent être positionnées au moins partiellement dans un espace défini par les droites d1 et d2 passant par l'extrémité des retours saillants 9 permettant la retenue des spires (ici les retours saillants 9 des bras B1 et B2) et perpendiculaires à la droite Δ reliant les extrémités desdits retours saillants 9 permettant la retenue des spires. Ainsi, les spires de la dernière bobine d'une série doivent être situées au moins partiellement entre les droites d1 et d2, comme par exemple la spire s, et non dans les zones z1 et z2 situées à l'extérieur des droites d1 et d2 où le risque de décrochage est important car les spires ne sont plus retenues par les retours saillants 9. Ainsi, le nombre de spires de la dernière bobine C9, C9' peut être déterminé de sorte que l'ensemble des spires de la dernière bobine C9, C9' se trouve au moins partiellement dans la zone prédéfinie entre les deux droites d1 et d2. Le risque de décrochage des spires de la dernière bobine C9, C9' est alors largement réduit voire supprimé.

Selon un autre mode de réalisation de la présente invention, au moins une spire supplémentaire d'une série de bobines est enroulée entre plusieurs bras dont l'un au moins est différent des bras autour desquels est enroulée la dernière bobine de la série. De plus, le sens d'enroulement de la, au moins une spire supplémentaire peut être le même que celui des spires des bobines (horaire ou antihoraire) de la série ou peut être différent. En pratique, on choisit préférentiellement le sens d'enroulement qui augmente le couple moteur et qui dépend du décalage entre les bobines notamment.

Cependant, étant donné que le nombre de spires supplémentaires est réduit, le sens d'enroulement de la ou des spire(s) supplémentaire(s) n'influence pas trop le fonctionnement de la machine électrique tournante. Le nombre de spires supplémentaires correspond par exemple à la différence entre le nombre de spires de la dernière bobine et le nombre de spires des bobines précédentes. Par exemple, dans l'exemple précédemment décrit à partir de la figure 3, la dernière bobine C9, C9' comprend 27 spires (tandis que les autres bobines C1...C8, Ci'...C8' comprennent 30 spires) et trois spires supplémentaires sont enroulées autour de bras dont l'un au moins est différent des bras de la dernière bobine C9, C9' de manière à ce que les spires supplémentaires soient retenues par les retours saillants des bras autour desquels elles sont enroulées. La ou les spires de maintien supplémentaires sont enroulées dans la continuité de la dernière bobine de la série de sorte que si la dernière bobine doit être connectée à une première et une deuxième bornes prédéfinies du collecteur 11, la première extrémité de la dernière bobine est reliée à la première borne et l'extrémité de la ou des spires supplémentaires est reliée à la deuxième borne.

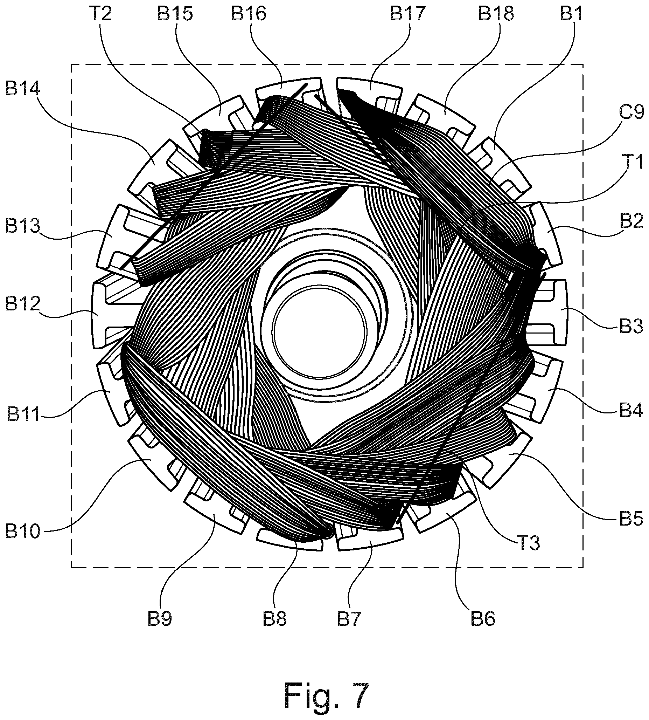

De manière préférentielle, de manière à limiter l'influence de la, au moins une, spire supplémentaire sur le fonctionnement du rotor 1, cette, au moins une, spire supplémentaire s'étend dans une direction sensiblement égale à 360° divisé par le nombre de pôles du moteur par rapport à la direction des spires de la dernière bobine C9, C9', c'est-à-dire dans une direction sensiblement perpendiculaire à la direction des spires de la dernière bobine C9, C9' pour un moteur comprenant quatre pôles. La figure 7 représente un schéma d'un rotor 1 comprenant dix-huit bras dont l'une des dernières bobines C9 est enroulée autour des bras B18, B17, B1 et B2 comme schématisé par le trait T1 de sorte que pour obtenir des spires supplémentaires disposées à environ 90° de cette dernière bobine C9, les spires supplémentaires peuvent être enroulées autour des bras B13, B14, B15 et B16 comme représenté par le trait T2 ou autour des bras B3, B4, B5 et B6 comme représenté par le trait T3. Dans le cas du trait T2, les spires supplémentaires viennent recouvrir au moins partiellement les spires de l'avant-dernière bobine C8. De plus, le sens de bobinage (ou sens d'enroulement) de cette spire supplémentaire T2 sera préférentiellement contraire au sens de bobinage de la dernière bobine C9.

De manière préférentielle, l'ensemble des spires supplémentaires est enroulé autour des même bras pour faciliter l'enroulement de ces spires mais il est également possible de répartir les spires supplémentaires à des emplacements différents.

D'autres emplacements sont également possibles pour la ou les spires supplémentaires. La ou les spires supplémentaires peuvent par exemple être enroulées autour d'au moins un des bras autour desquels est enroulée la dernière bobine C9, C9' et de préférence de manière à recouvrir partiellement les spires de la dernière bobine C9, C9' ce qui permet de renforcer le maintien des spires de la dernière bobine C9, C9'. Les spires supplémentaires sont par exemple décalées d'un bras (comme pour la succession de bobines), c'est-à-dire que les spires supplémentaires sont enroulées autour des bras B18, B1, B2 et B3 dans le cas de la figure 7. Ce décalage d'un bras permet de faciliter la fabrication du rotor 1 puisque la machine utilisée pour former les spires est déjà configurée pour effectuer un décalage d'un bras entre les différentes bobines. Cependant, d'autres positionnements, différents du positionnement de la dernière bobine C9, C9', de la ou les spires supplémentaires sont également possibles.

De la même manière, la deuxième série de bobines (du rotor 1 de la figure 7) peut également comprendre au moins une spire supplémentaire. Il est également possible d'avoir une seule spire supplémentaire recouvrant partiellement les spires respectives des deux dernières bobines des deux séries de sorte qu'une seule série de bobine comprend une ou plusieurs spires supplémentaires permettant le maintien des spires des dernières bobines des deux séries.

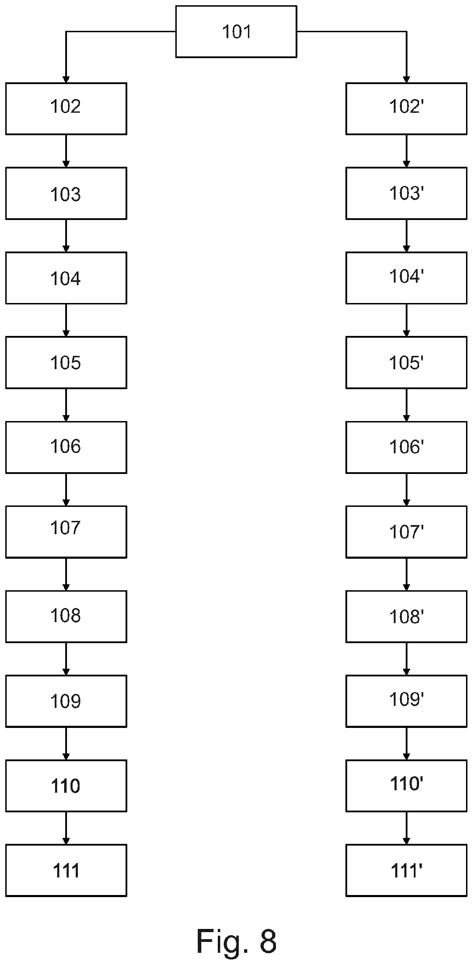

La figure 8 représente les différentes étapes de la fabrication du rotor 1.

La première étape 101 concerne la fabrication du corps 3. Comme indiqué précédemment, ce corps 3 peut être réalisé à partir d'un paquet de tôles fixées entre elles. La première étape comprend par exemple une première sous-étape de découpe des tôles à la forme désirée, notamment en fonction du nombre de bras du corps 3 et une deuxième sous-étape de fixation des tôles entre elles, par exemple par agrafage, soudure ou collage.

Le procédé comprend ensuite une succession d'étapes 102 à 109, chaque étape correspondant à un enroulement d'un premier nombre prédéterminé N, par exemple 30, de spires autour d'une pluralité de bras pour former une bobine C1...C8. Deux étapes d'enroulement successives de bobines d'une série étant réalisées autour d'au moins un bras commun et d'au moins un bras distinct de sorte que deux bobines adjacentes d'une série sont décalées angulairement l'une par rapport à l'autre avec un recouvrement partiel. Ainsi, l'étape 102 correspond par exemple à la formation de la bobine C1 autour des bras B9, B10, B11 et B12 (comme représenté sur la figure 3) et l'étape 103 correspond par exemple à la formation de la bobine C2 autour des bras B8, B9, B10 et B11. Les spires de la bobine C2 recouvrent donc les spires de la bobine C1 au niveau des bras B9, B10 et B11.

De plus, dans le cas où le rotor 1 comprend plusieurs séries de bobines, notamment deux séries de bobines comme dans le cas du rotor 1 de la figure 3, le procédé comprend une deuxième succession d'étapes 102' à 109' qui sont réalisées respectivement simultanément aux étapes 102 à 109. L'étape 102' correspond alors à la formation de la bobine C1' autour des bras B18, B1, B2 et B3 (comme représenté sur la figure 3) et l'étape 103' correspond alors à la formation de la bobine C2' autour des bras B1, B2, B3 et B4. Les spires de la bobine C2' recouvrent donc les spires de la bobine C1' au niveau des bras B1, B2 et B3.

Le procédé comprend également une étape 110 d'enroulement d'un deuxième nombre prédéterminé N' de spires du bobinage. Ce deuxième nombre N' est inférieur au premier nombre prédéterminé N (30) et est par exemple égal à 27. Cette étape 110 permet la formation d'une dernière bobine C9 autour d'une pluralité de bras du corps. Comme pour les étapes 102 à 109, cette étape supplémentaire est réalisée autour d'au moins un bras commun avec l'avant-dernière bobine C8 et d'au moins un bras distinct de l'avant-dernière bobine C8 de sorte que la dernière bobine est décalée angulairement de l'avant-dernière bobine avec un recouvrement partiel. Dans le cas des figures 3 et 5, la dernière bobine C9 est réalisée par un enroulement de 27 spires autour des bras B17, B18, B1 et B2.

De la même manière, une étape parallèle et simultanée 110' peut être réalisée pour former une dernière bobine C9'. Cependant, il est à noter que pour réaliser plusieurs d'étapes d'enroulement simultanément, la machine utilisée pour la fabrication du bobinage doit comprendre plusieurs bras d'enroulement, chaque bras pouvant réaliser des enroulements pour former une bobine C1...C9'.

Alternativement, les étapes 102' à 110' peuvent être décalées -temporellement par rapport aux étapes 102 à 110.

Les étapes 102' à 110' peuvent également être intercalées temporellement par rapport aux étapes 102 à 110, notamment dans le cas où la première série de bobine C1...C9 et la deuxième série de bobines C1'...C9' sont réalisées par une machine comprenant un seul bras d'enroulement. Dans ce cas, on commence par l'étape 102 puis l'étape 102' puis l'étape 103, puis l'étape 103' et ainsi de suite.

Le procédé comprend également une étape optionnelle 111 d'enroulement d'au moins une spire supplémentaire telle que décrite précédemment. Le nombre de spires supplémentaires est par exemple de trois spires qui sont par exemple enroulées selon une direction sensiblement perpendiculaire aux spires de la dernière bobine formée à l'étape 110. La ou les dernières spires sont par exemple bobinées dans le sens contraire de la dernière bobine.

De la même manière, une étape optionnelle 111' peut aussi être réalisée pour former trois spires supplémentaires associées à la deuxième série de bobines. Les étapes 111 et 111' peuvent être simultanées.

Les spires supplémentaires sont par exemple disposées de manière à recouvrir partiellement les spires des dernières bobines C9 et C9' des deux séries. Les différentes spires supplémentaires peuvent être bobinées sur des bras différents les unes des autres. Par ailleurs, les spires supplémentaires peuvent être disposées de manière à recouvrir partiellement les spires des dernières bobines de deux séries, notamment pour un rotor 1 comprenant quatre séries de bobines.

## Revendications

1. Rotor (1) de machine électrique tournante comprenant :
- un corps (3) comprenant une âme centrale cylindrique (5) et une pluralité circonférentielle de bras (B1...B18) s'étendant radialement à partir de l'âme centrale cylindrique (5), le corps (3) étant destiné à être monté mobile autour d'un axe de rotation X,
- un bobinage réalisé par des enroulements de spires et formant au moins une série de bobines (C1...C9, C1'...C9'), une bobine (C1...C9, C1'...C9') comprenant un nombre prédéterminé de spires autour d'au moins deux bras (B1...B18) du corps (3), deux bobines (C1...C9, C1'...C9') adjacentes d'une série étant décalées angulairement l'une par rapport à l'autre avec un recouvrement partiel,
**caractérisé en ce que** la dernière bobine d'une série (C9, C9'), située radialement le plus à l'extérieur, comprend un nombre prédéterminé de spires inférieur au nombre prédéterminé de spires des autres bobines de la série (C1...C8, Ci'...C8').

2. Rotor (1) selon la revendication 1 dans lequel au moins une série de bobines (C9, C9') comporte au moins une spire supplémentaire enroulée entre plusieurs bras (B1...B18) dont l'un au moins est différent des bras (B1...B18) autour desquels est enroulée la dernière bobine de la série (C9, C9').

3. Rotor (1) selon la revendication 2 dans lequel la, au moins une, spire supplémentaire est enroulée autour d'au moins un des bras (B1...B18) autour duquel est enroulée la dernière bobine de la série (C9, C9').

4. Rotor (1) selon l'une des revendications 2 ou 3 dans lequel la, au moins une, spire supplémentaire s'étend dans une direction (T2, T3) sensiblement égale à 360° divisé par le nombre de pôles de la machine électrique tournante par rapport à la direction des spires de la dernière bobine de la série (C9, C9').

5. Rotor (1) selon l'une des revendications 2 à 4 dans lequel la, au moins une, spire supplémentaire recouvre partiellement les spires de la dernière bobine de la série (C9, C9').

6. Rotor (1) selon l'une des revendications précédentes comprenant deux séries de bobines disposées à 180° l'une par rapport à l'autre par rapport à l'axe de rotation X.

7. Rotor (1) selon l'une des revendications précédentes dans lequel les bras du corps ont une forme générale de T dont la base est dirigée vers l'axe de rotation X et dont l'extrémité libre forme deux retours saillants (9) de retenue des spires, le nombre prédéterminé de spires de la dernière bobine de la, au moins une, série (C9, C9') étant déterminé de sorte que les spires de ladite dernière bobine (C9, C9') sont comprises au moins partiellement dans un espace défini par les droites (d1, d2) passant par l'extrémité des retours saillants (9) permettant la retenue des spires de ladite dernière bobine (C9, C9') et perpendiculaires à la droite (Δ) reliant les extrémités desdits retours saillants (9) permettant la retenue des spires de ladite dernière bobine (C9, C9').

8. Rotor (1) selon l'une des revendications précédentes configuré pour coopérer avec un stator de la machine électrique tournante comprenant un nombre de pôles supérieur ou égal à quatre.

9. Procédé de fabrication d'un rotor (1) de machine électrique tournante comprenant un corps (3) comprenant une âme centrale cylindrique (5) et une pluralité circonférentielle de bras (B1...B18) s'étendant radialement à partir de l'âme centrale cylindrique (5), le corps (3) étant destiné à être monté mobile autour d'un axe de rotation X, le procédé comprenant :
- une succession d'étapes (102...109, 102'...109') d'enroulement d'un premier nombre prédéterminé N de spires d'un bobinage autour d'au moins deux bras (B1...B18) du corps (3) pour former au moins une série de bobines (C1...C8, Ci'...C8'), les étapes d'enroulement étant réalisées de sorte que deux bobines adjacentes d'une série sont enroulées autour d'au moins un bras (B1...B18) commun et d'au moins un bras (B1...B18) distinct, deux bobines adjacentes d'une série (C1...C9, C1'...C9') étant décalées angulairement l'une par rapport à l'autre avec un recouvrement partiel,
- une étape supplémentaire (110, 110') d'enroulement d'un deuxième nombre prédéterminé N' de spires du bobinage inférieur au premier nombre prédéterminé N autour d'au moins deux bras (B1...B18) du corps pour former une dernière bobine de la série (C9, C9'), située radialement le plus à l'extérieur, l'étape supplémentaire étant réalisée autour d'au moins un bras (B1...B18) commun avec l'avant-dernière bobine de la série (C8, C8') adjacente à la dernière bobine de la série (C9, C9') et d'au moins un bras distinct de l'avant-dernière bobine (C8, C8') de sorte que la dernière bobine de la série (C9, C9') est décalée angulairement de l'avant-dernière bobine de la série (C8, C8') avec un recouvrement partiel.

10. Procédé de fabrication selon la revendication 9 comprenant une autre étape supplémentaire (111, 111') d'enroulement d'au moins une spire du bobinage autour d'au moins deux bras (B1...B18) dont l'un au moins est différent des bras (B1...B18) autour desquels est enroulée la dernière bobine de la série (C9, C9').
